# EUROPEAN PATENT SPECIFICATION

(11) **EP 0 284 324 B1**
(45) Date of publication and mention of the grant of the patent: **22.12.1993**
(21) Application number: 88302446.5
(22) Date of filing: 21.03.1988
(51) Int. Cl.: H04M 1/72, H04M 1/272

(54) **Radio telephones**
Funkfernsprecher
Radiotéléphones

(30) Priority: 23.03.1987 JP 65558/87
(43) Date of publication of application: 28.09.1988
(73) Proprietor: KABUSHIKI KAISHA TOSHIBA, Kawasaki-shi, Kanagawa-ken 210 (JP)
(72) Inventor: Toki, Akio§c/o Patent Division, Minato-ku Tokyo (JP)
(74) Representative: BATCHELLOR, KIRK & CO.

(56) References cited:
- EP-A- 0 213 929
- WO-A-85/02968
- WO-A-87/01546
- US-A- 4 220 820
- PATENT ABSTRACTS OF JAPAN, vol. 12, no. 430 (E-682)[3277], 14th November 1988 & JP-A-63 164 656
- PATENT ABSTRACTS OF JAPAN, vol. 10, no. 42 (E-382)[2099], 19th February 1986 & JP-A-60 197 028
- PATENT ABSTRACTS OF JAPAN, vol. 11, No.4 (E-468)[2451], 07.01.1987; & JP-A-61 189 736

## Description

This invention relates to radio telephones (typically cordless telephones) and, more particularly, to the storage of reduced dialling signals.

Radio telephones are comprised of a radio telephone set and a base unit. The radio telephone set has a handset, and the base unit is connected to wired telephone lines for exchanging speech signals between the wired telephone lines and the radio telephone set through a radio channel. The base unit and the radio telephone set each have a transmitter and a receiver.

When a call signal appears on a wired telephone line, the base unit transmits a paging signal to the radio telephone set through a predetermined control channel to set up a speech channel. The paging signal includes a channel signal to indicate one of a number of speech channels. In response, the radio telephone set sends out a paging response signal through the control channel. The base unit detects the intensity of the received paging response signal sent from the radio telephone set, i.e. the intensity of the paging response signal on the control channel. The base unit then stops the transmission of the paging signal when the detected intensity exceeds a predetermined level, and switches the radio channel between the base unit and the radio telephone set from the control channel to the speech channel indicated in the paging signal. The radio telephone set also switches the radio channel from the paging channel to the speech channel set by the received paging signal. Thereafter, the base unit transmits a bell ringing signal to the radio telephone set via the speech channel. After transmitting a bell ringing signal, the base unit establishes a speech path between the wired telephone line and the radio telephone set when it receives an "off-hook" signal from the radio telephone set.

When the base unit receives a call origination signal (an "off-hook" signal) from the radio telephone set through the control channel while it is in a waiting state, it detects the request from the radio telephone set to originate a call, and transmits a response signal which includes a channel signal indicating one of a plurality of speech channels. The base unit then establishes a speech path between the wired telephone line and itself, and switches the radio channel from the control channel to the speech channel in response to the received response signal. If the radio telephone set transmits a dial signal to the base unit through the speech channel, the dial signal is transmitted to the wired telephone line via the base unit.

Thus, the radio telephone apparatus is capable of receiving incoming telephone calls from the wired telephone lines and originating calls from the radio telephone set.

Telephones often provide the facility for reduced dialling, so that to dial a frequently called number, the user dials an reduced code instead of the number itself; this requires fewer keystrokes and reduces the chances of misdialling. The telephone number information required for this is normally stored in a RAM. In the above described radio telephones, the telephone set is powered by a small storage battery to enable the telephone set to be carried easily. As a result, a RAM for storing such telephone number information cannot be provided in the radio telephone set, because the life of the battery decreases if the voltage from the battery is continuously supplied to the RAM to store the telephone number information. The RAM is therefore provided in the base unit because the base unit is powered from an AC mains supply (via a conversion to DC).

In such radio telephones, the storing of telephone number information is carried out as follows. First, a user picks up the handset of the radio telephone set, and then depresses a registration key and one or more dial keys. When the handset is picked up, the radio telephone set detects an "off-hook" condition and transmits a call origination signal to the base unit. Thereafter, the operation of call origination is carried out as described above. When the registration key is depressed after the speech channel between the base unit and the radio telephone set is established, a corresponding key signal is transmitted to the base unit. The base unit then waits, in response to the received key signal, for the dialling information transmitted by the radio telephone set. When the handset is put down in its initial position after the dialling keys have been depressed, an end signal is transmitted to the base unit. The end operation is thereupon carried out and the radio telephone apparatus is returned to its waiting state again.

The reader may gain further enlightment as to the state of the art by reference to WO-A-85 /02968, JP-A-61 189 736 and its Japanese abstract publication, WO-A-87/01546 and especially EP-A-0 213 929, with respect to which claim 1 is characterised.

However, in such radio telephones, the telephone is in a busy state while the dialling signals are being stored in the memory as telephone number information, because the base unit is connected to the wired telephone lines electrically until the base unit receives the end signal in response to the handset being set down in its initial position, i.e., hung up (placed "on-hook"). As a result, an incoming telephone call from the wired telephone line cannot be received while the dialling signals are being stored as telephone number information, and the radio telephone apparatus therefore cannot respond to an incoming telephone call.

This problem can cause significant inconvenience in a system capable of storing a large number of telephone numbers. For example, if 100 numbers are to be stored, the telephone apparatus will be in its busy state for a long time and many telephone calls may be missed.

The main object of the present invention is to overcome this disadvantage.

Accordingly the present invention provides a radio telephone apparatus comprising a base unit connected to a wire telephone line and communicating with a radio telephone set via a radio channel, and including: dialling means in the radio telephone set for generating dial signals; registration means for generating a control signal representing a storage request for telephone number information; and memory means in the base unit for storing the dial signal from the dialling means as telephone number information in response to the control signal; characterised in that the base unit includes disconnect control means; responsive to the control signal for electrically disconnecting the wired telephone line from the base unit to break a speech path; and notification means for detecting an incoming telephone call on the wired telephone line and generating a ringing signal for notifying the user if such detection occurs while the telephone number information is being stored.

A radio telephone system embodying the invention, and various modifications thereof, will now be described, by way of example, with reference to the drawings, in which:
Figures 1 and 2 are external views of two kinds of radio telephone sets;
Figure 3 is a block diagram of a radio telephone system embodying the present invention;
Figures 4-6 are flow charts of a radio telephone apparatus of Figure 3;
Figure 7 is a flow chart of a modified mode of operation of the Figure 3 apparatus;
Figure 8 is a block diagram of a modification of the Figure 3 apparatus;
Figure 9 is a flow chart of the apparatus of Figure 8; and
Figure 10 is a block diagram of another modification of the apparatus of Figure 3.

### Introductory Summary

The present radio telephone apparatus comprises a base unit and a radio telephone set connected to the base unit through a radio channel. The base unit is coupled to a wired telephone line and powered by DC power converted from a commercial AC power supply, and the radio telephone set is powered by DC from a small storage battery.

The radio telephone set includes dial keys and a registration key. When the handset of the radio telephone set is picked up, a call origination signal is transmitted to the base unit. In response to the received call origination signal, the line relay of the base unit connects the wired telephone line to the base unit electrically to make a speech path. A registration key signal is transmitted to the base unit when the registration key is depressed after this connection; in response to the received registration signal, the line relay disconnects the wired telephone line to the base unit electrically to break the speech path. Thereafter, if dial keys are depressed, a dialling signal is transmitted to the base unit and is stored in a memory in the base unit as telephone number information. The stored dial signal can then be subsequently dialled by a simplified dialling operation, which may conveniently be initiated by depressions of the # key (sharp key), 1 key and/or 0 key.

A notification circuit, connected to the wired telephone line, detects an incoming telephone call and produces a ringing signal to notify a user of an incoming telephone call. Therefore, the incoming telephone call can be received from the wired telephone line and the user will be notified of the incoming telephone call by the ringing signal.

### Detailed Description

### Figures 1 and 2

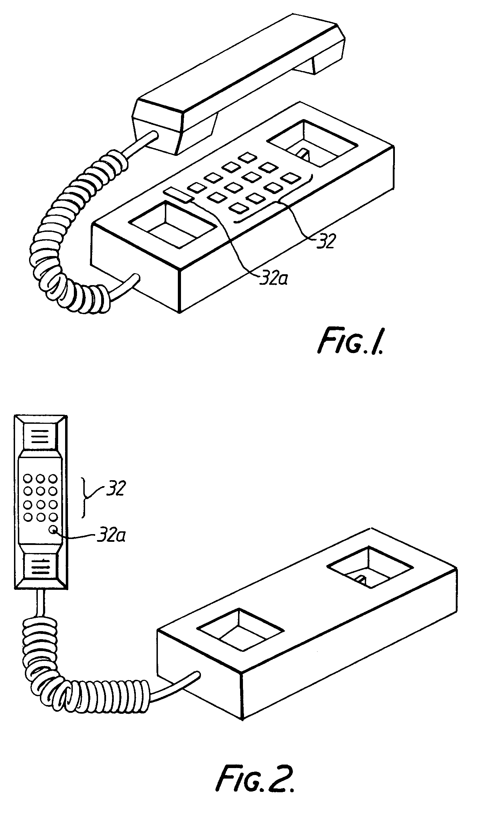

Figures 1 and 2 show two physical forms of radio telephone set, with dial keys 32 and a registration key 32a.

### Figure 3

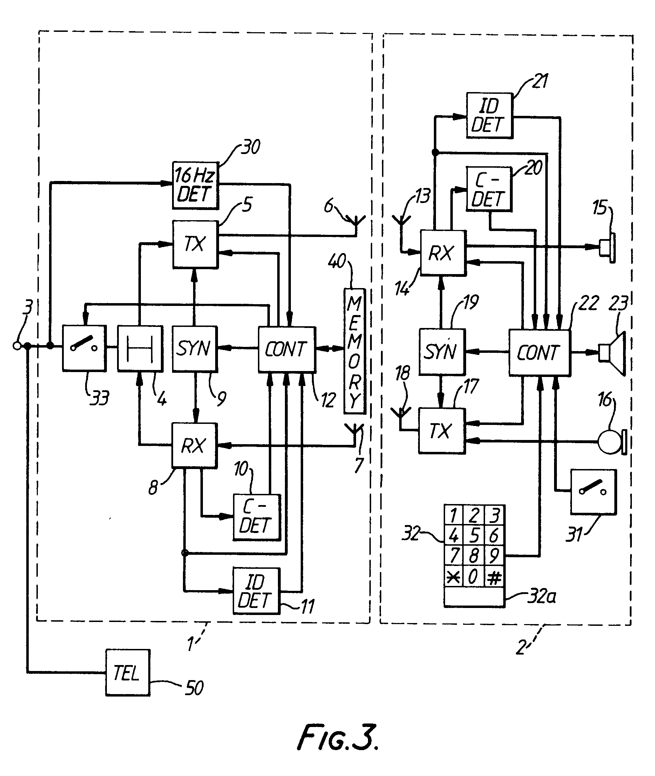

Figure 3 is a block diagram of the radio telephone apparatus. A base unit 1 is coupled to a radio telephone set 2 through one of a plurality of radio channels including a control channel (C-CH) and a plurality of speech channels (S-CHs), and is also connected to a wired telephone line 3. Base unit 1 includes an AC/DC converter and an AC plug (not shown) in order to produce a DC voltage from a commercial AC power source. The DC voltage is supplied to the electrical components of base unit 1, which is thus operated by the converted DC voltage. On the other hand, the radio telephone set 2 includes a small storage battery (not shown) to supply DC power to its electrical components.

A signal sent from a wired telephone line 3 is applied to a hybrid circuit 4 via a line relay 33 when that relay is closed (ON state) to make a speech path between wired telephone line 3 and base unit 1. Hybrid circuit 4 supplies the signal to a transmitter 5, which modulates a carrier wave with that signal and transmits the modulated signal to radio telephone set 2 via a transmitting antenna 6. The carrier wave is supplied from a synthesizer 9 and has a frequency corresponding to a radio channel selected, in a known manner, by the synthesizer 9.

A signal transmitted from radio telephone set 2 is received by a receiving antenna 7 and demodulated by a receiver 8 using a carrier wave supplied by the synthesizer 9. The demodulated signal is sent to wired telephone line 3 via hybrid circuit 4 and line relay 33 when that relay is closed. The demodulated signal is also supplied to a received field detector 10 and an identification signal detector 11. Detector 10 comprises a carrier squelch circuit or noise squelch circuit, and detects the intensity of the received field, while detector 11 determines whether the identification contained in the demodulated signal corresponds to a specific identification signal allotted to radio telephone set 2. The detected signals from detectors 10 and 11 are supplied to control circuit 12. The demdulated signal from receiver 8 is also supplied to control circuit 12 to decode a control signal contained in the demodulated signal to establish a speech path.

The call signal detector 30 detects a call signal (16 Hz signal) sent from the wired telephone line 3, and informs control circuit 12 of the fact that the call signal has been received. Therefore, control circuit 12 detects an incoming telephone call from wired telephone line 3.

Control circuit 12 includes a microcomputer, a RAM for storing operation data, and a ROM containing a stored operation program, and controls transmitter 5, synthesizer 9 and line relay 33 to establish a speech path in response to the output signals of receiver 8 and detectors 10, 11, and 30. Control circuit 12 also includes a dial circuit (not shown) to produce a dial signal such as a DTMF (dual tone multi-frequency) signal or DP (dial pulse) signal. The resulting dial signal is sent to wired telephone line 3 via line relay 33.

Memory 40 comprises a RAM and stores a plurality of telephone numbers and a data table representing a relationship between reduced telephone numbers and address data. Memory 40 is controlled by control circuit 12.

In radio telephone set 2, a signal transmitted from the base unit 1 is received by a receiving antenna 13, demodulated by a receiver 14 and then fed to a speaker 15. In the same manner as in base unit 1, the signal demodulated by receiver 14 is supplied to a received signal detector 20, an identification signal detector 21 and a control circuit 22. A voice signal received by a microphone 16 is supplied to a transmitter 17 as a modulation input and then transmitted to base unit 1 through a transmitting antenna 18.

Control circuit 22 includes a microcomputer, a RAM for storing operation data, and a ROM containing a stored operation program, and controls receiver 14, transmitter 17 and synthesizer 19 to establish a speech path in response to the output signals of receiver 14 and detectors 20 and 21. Control circuit 22 also causes speaker 23 to produce a ringing signal when it detects a bell ringing signal in the demodulated signal from receiver 14. Speakers 15 and 23 and microphone 16 are of designs which consume very little power. Speaker 15 and microphone 16 are arranged in the handset. Control circuit 22 further controls the operations of call origination and data registration in response to data from hook switch 31, dial keys 32 and registration key 32a, these keys can be depressed when the hand set of radio telephone set 2 is picked up.

Another telephone apparatus 50, such as a conventional telephone apparatus, is directly connected to wired telephone line 3 so that it can respond to the incoming telephone call from wired telephone line 3.

### Figure 4

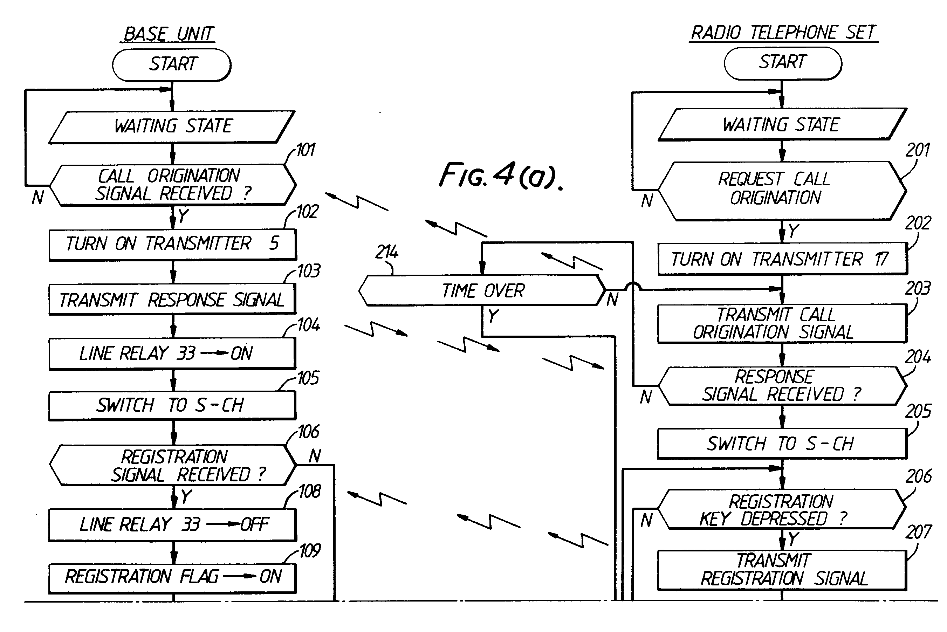

Figure 4 shows the operation of this apparatus.

In a waiting state, control circuit 12 causes transmitter 5 to turn off and control circuit 22 also causes transmitter 17 to turn off, in order to prevent unnecessary transmission of radio signals. Receiver 14 is normally also off, but control circuit 12 periodically turns it on briefly; this minimizes the power consumption of the receiver when it is the waiting state. Also, in the waiting state, line relay 33 is opened (OFF state) by control circuit 12.

When the hand set of radio telephone set 2 is picked up by the user, an off-hook signal is supplied to control circuit 22 because hook switch 31 is closed (ON state). Control circuit 22 generates a call origination signal in response to the off-hook signal, step 201, and causes transmitter 17 to turn on, step 202. Control circuit 22 then sends the call origination signal to the transmitter 17, which modulates and transmits the signal, step 203. In this state, synthesizer 19 supplies a carrier wave corresponding to a control channel to transmitter 127. After transmitting the call origination signal, control circuit 22 causes receiver 14 to turn on and remain in the ON state.

The transmitted call origination signal is received and demodulated by receiver 8, which supplies it to control circuit 12. To determine if the demodulated signal is a call origination signal, step 101, control circuit 12 causes transmitter 5 to turn on, step 102. Control circuit 12 then sequentially switches the receiving channel through the speech channels in sequence to find a vacant speech channel. If control circuit 12 finds a vacant speech channel, it sends a response signal to transmitter 5 indicating the vacant speech channel together with a predetermined identification signal, step 103. Control circuit 12 then sends control signals to line relay 33 and synthesizer 9 to connect wired telephone line 3 to hybrid circuit 4 and switch the control channel to the selected speech channel, steps 104 and 105.

When receiver 14 receives the transmitted response signal, it demodulates the signal and sends the demodulated signal to control circuit 22. When this circuit detects a demodulated signal corresponding to the response signal, step 204, it sends a control signal to synthesizer 9 to switch the control channel to the indicated speech channel in accordance with the speech channel signal portion of the response signal, step 205. For this, control circuit 22 compares the identification portion of the response signal with predetermined identification data stored therein. If the identification signal does not correspond to the predetermined identification data, the demodulated signal is not responded to. If the response signal is not received for a predetermined period, step 214, control circuit 22 annuls the received origination request and causes the transmitter 17 to turn off, step 213. Control circuit 22 also causes receiver 14 to turn off and on periodically. Therefore, radio telephone set 2 is placed in the waiting state again.

When the speech channel between base unit 1 and radio telephone set 2 is established, a dial tone from wired telephone line 3 is transmitted to radio telephone set 2 and is emitted by speaker 15. If dial keys 32 are depressed after a dial tone is heard from speaker 15, then key data corresponding to the depression of these keys is supplied to control circuit 22. Control circuit 22 detects whether the registration key 32a is depressed in response to the received key data and provides the data to transmitter 17, steps 206 and 207. Transmitter 17 modulates the data and transmits the modulated signal as a registration signal through the speech channel. However, if dial keys 32 are depressed after a dial tone is heard, key data corresponding to the depressed dial keys 32 is supplied to control circuit 22, steps 208 and 209. Transmitter 17 modulates the data and transmits the modulated signal as a dial signal through the speech channel.

When control circuit 12 receives a dial signal after switching to the speech channel, step 110, it stores the received dial signal in its buffer and looks at a state of a registration flag in its buffer, step 111. Since the registration flag is in the OFF state until the registration signal is received, control circuit 12 detects a speech mode in response to the state of the registration flag, step 111. Control circuit 12 then sends a dial signal, such as a DTMF (dual tone multi-frequency) or a DP (dial pulse) signal, to wired telephone line 3 through line relay 33, in response to the stored dial signal, step 112. Thus, the operation of call origination is completed and the radio telephone apparatus is in a speech state.

When, at the end of the call, the handset of radio telephone set 2 is put down, the control circuit 22 detects the ON-hook signal from hook switch 31 as the end of speech, step 210; it sends an end signal to transmitter 17 to transmit the signal to base unit 1, step 211, and sends a control signal to synthesizer 19 to switch the speech channel to the control channel, step 212. Control circuit 22 further turns transmitter 17 off, step 213, and turns receiver 14 on and off periodically. Thus radio telephone set 2 is in the waiting state again. The end signal is received by receiver 8, which demodulates it and sends it to the control circuit 12, which sends a signal to synthesizer 9 to switch the speech channel to the control channel in response to the end signal, steps 114 and 116. Control circuit 12 also sends control signals to line relay 33 and transmitter 5 to disconnect the wired telephone line 3 from hybrid circuit 4 and turn off transmitter 5, steps 117 and 118. Thus base unit 1 is also in the waiting state again.

If a registration signal is transmitted to base unit 1 in step 207, the signal is received by receiver 8. Control circuit 12 sends a control signal to line relay 33 to disconnect wired telephone line 3 from receiver 8, steps 106 and 108. Control circuit 12 also sets the registration flag to the ON state, step 109, and thereby establishes a registration mode for telephone number information. Thereafter, since the registration flag is ON, control circuit 12 stores the received dial signals in memory 40 as telephone number information when receiving them from radio telephone set 2, steps 110, 111 and 113. Since the user has to put down the handset after depressing dial keys 32 to register the telephone number, an ON-hook signal is supplied to control circuit 22, which carries out the end of speech operation in response to the ON- hook signal, as described above. When control circuit 12 receives the end signal after storing the data signal in memory, step 115, it sends a control signal to the synthesizer 9 to switch the speech channel to the control channel, step 120. Control circuit 12 also causes transmitter 5 to turn off and sets the registration flag to the OFF state, steps 118 and 119.

If control circuit 12 does not receive the end signal within a predetermined period after the last signal is received, it automatically carries out the end of speech operation (not shown in Figure 4).

### Figure 5

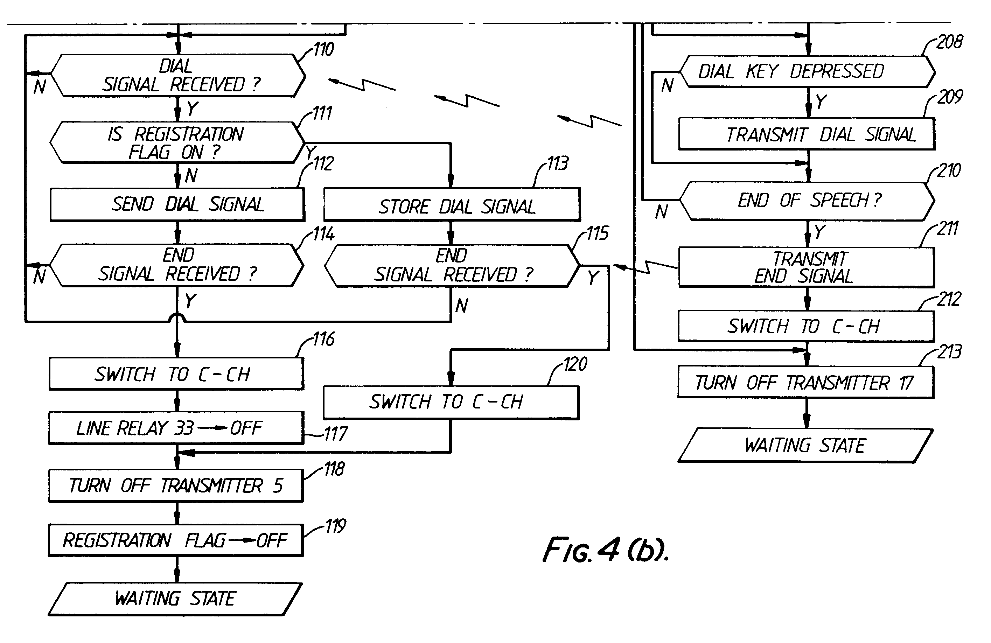

Figure 5 shows the operation of step 113 in greater detail. When the user enters the telephone number information, he first depresses dial keys 32 to input a "reduced" telephone number which is later used to identify the actual telephone number. Next, he depresses dial keys 32 to input a full telephone number. For example, the user depresses the *****, **1**, and **0** keys in sequence to input the reduced telephone number ***10**. He then depresses, say, the **3**, **0**, **...**, and **1** keys in sequence to input the full telephone number **30...1**. Control circuit 12 determines whether the dial signal corresponding to the reduced telephone number is received in response to the received dial signal, step 501. The format of reduced telephone number can be predetermined; it may be, for example, ***** followed by two digits. If control circuit 12 recognizes a received dial signal as a reduced telephone number, it scans the data table in memory 40 and determines the storage address corresponding to the reduced telephone number, step 502. Thereafter, if control circuit 12 receives the dial signal, steps 503 and 504, it stores the received dial signal in that storage address as the full telephone number information, step 505. If control circuit 12 recognizes a received dial signal as a reduced telephone number again after storing the dial signal, step 501, it repeats the above-described operation.

### Figure 6

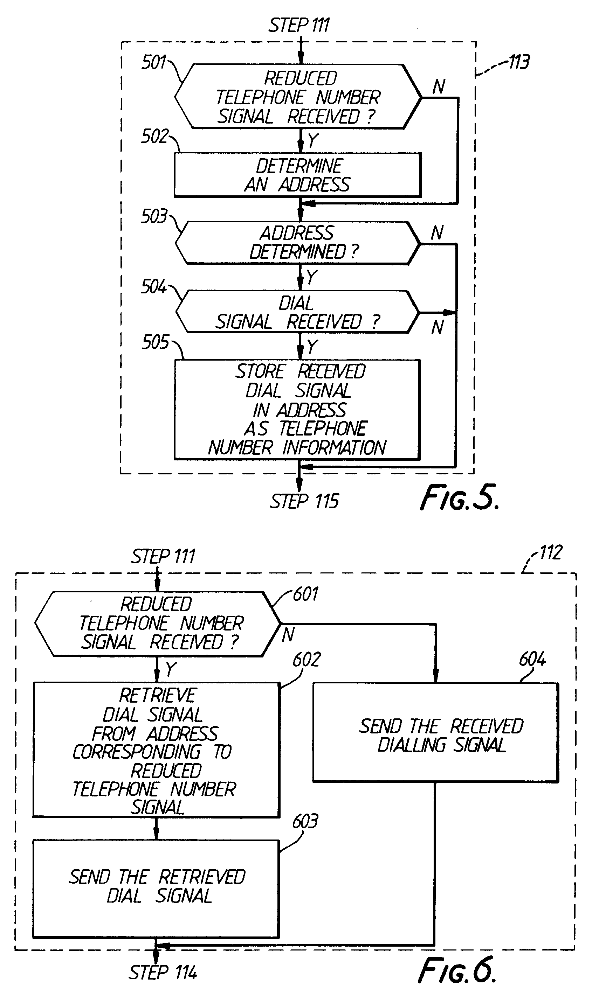

Figure 6 shows the operation of step 112 of Figure 4 in greater detail. When the user depresses dial keys 32 to input the reduced telephone number instead of the full telephone number, control circuit 12 detects whether the received dial signal corresponds to a reduced telephone number, step 601. If such correspondence is detected, step 601, control circuit 12 scans the data table in memory 40 to find the storage address in memory 40 corresponding to the reduced telephone number and retrieves the stored signal from that storage address in memory 40, step 602. Control circuit 12 then sends the dial signal to wired telephone line 3 through the line relay 33 in response to the retrieved signal, step 603. If the user depresses dial keys 32 to input the full telephone number instead of the reduced telephone number, step 601, control circuit 12 sends the dial signal to wired telephone line 3 in response to the received dial signal, step 604.

Thus since line relay 33 is opened while the dial signal from radio telephone set 2 is stored, the radio telephone apparatus is in the waiting state. Therefore, a call signal from wired telephone line 3 can be responded to even while the storing operation is carried out. If a call signal appears from wired telephone line 3, telephone apparatus 50 detects the call signal and generates a ringing signal to notify the user of the incoming telephone call. If the user puts down the handset in response to the incoming telephone call and picks it up again, the radio telephone apparatus carries out the response operation for the incoming telephone call after carrying out the end of speech operation.

### Figure 7

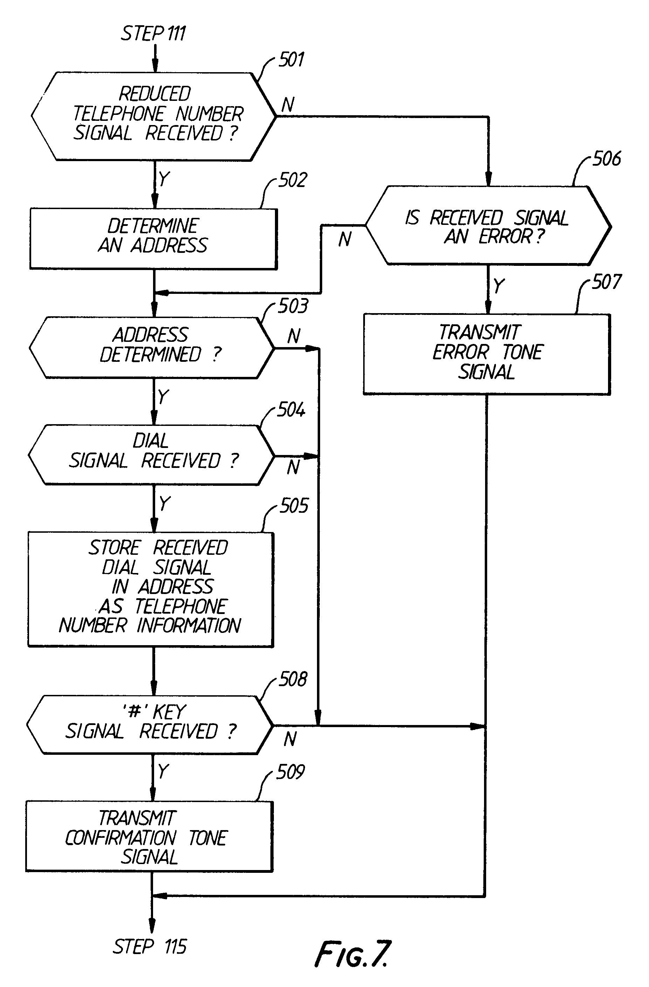

Figure 7 is a flow chart for a modified mode of operation of the Figure 3 system, illustrating the registration of telephone number information and corresponding to Figure 5. In this flow chart, if control circuit 12 detects the received dial signal to be an erroneous reduced telephone number, step 506, it causes transmitter 5 to transmit an error tone signal to radio telephone set 2, step 507. For example, if ten reduced telephone numbers ***01** to ***10** are predetermined, control circuit 12 detects the received dial signal as an erroneous reduced telephone number if it receives the dial signal corresponding to ***99**. The transmitted error tone signal is received by receiver 14 and emitted by speaker 15. Also, if control circuit 12 recognizes the received dial signal as corresponding to the **#** key signal after storing the received dial signal in memory 40, step 508, it sends a confirmation tone signal to transmitter 5 in order to transmit the tone signal to radio telephone set 2, step 509. The confirmation tone signal is then received by receiver 14 and emitted by speaker 15. The generated tone signal notifies the user that the dial signal is stored in memory 40 as the full telephone number information.

### Figures 8 and 9

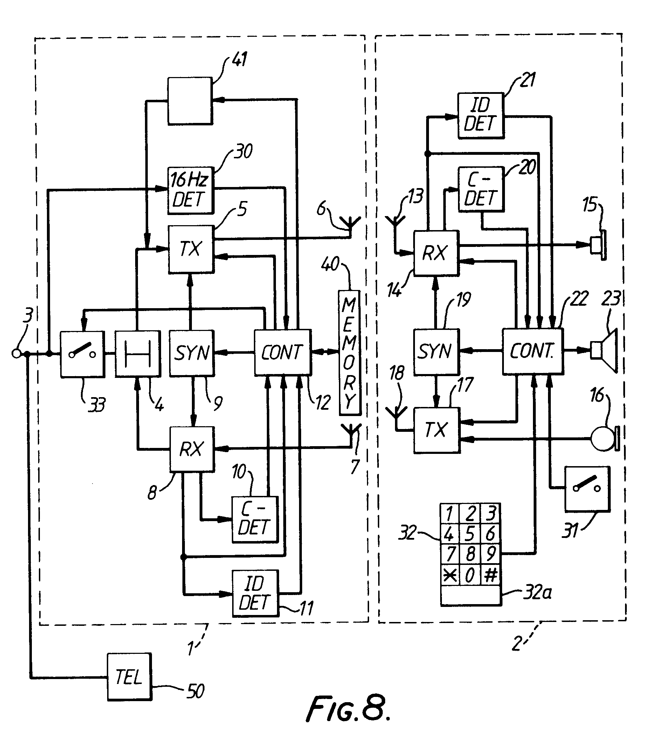

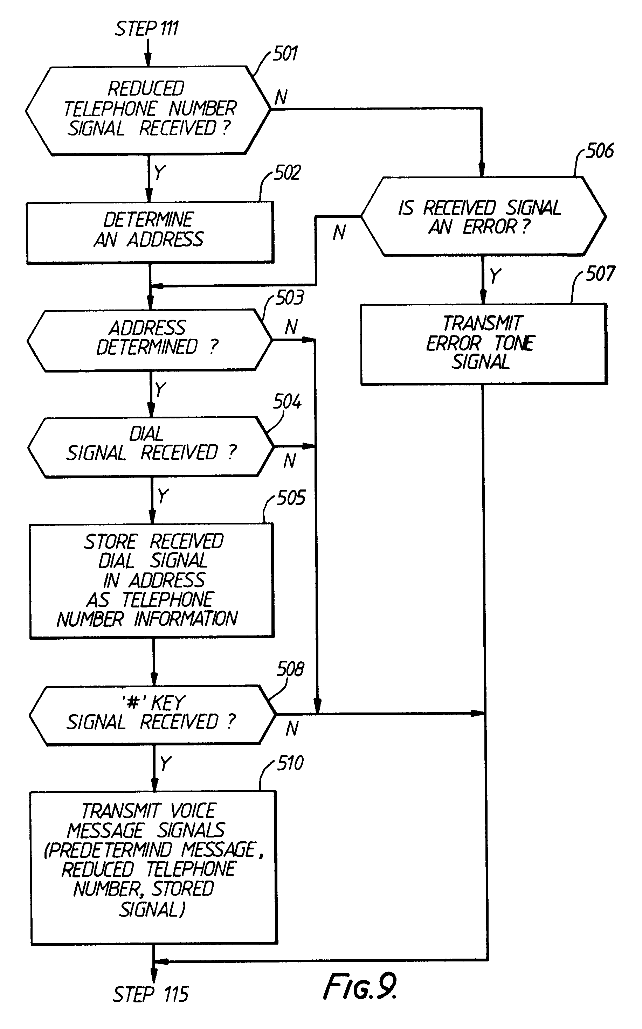

Figure 8 shows a modified circuit, in which base unit 1 includes a voice synthesizing device 41 which generates a voice message signal in response to data from control circuit 12. Figure 9 is a flow chart for this circuit, illustrating the registration of telephone number information. The other operations are the same as for the Figure 1 system.

In this circuit, if control circuit 12 recognizes the received dial signal as corresponding to the **#** key signal after storing the received dial signal in memory 40, step 508, it retrieves the stored dial signal and the corresponding reduced telephone number data from memory 40 and sends message data to the voice synthesizing device 41, step 510. The message data includes predetermined message data, reduced telephone number data and a stored dial signal; a typical example of such message data is "Full telephone number XXXXXXX has been stored; this telephone number corresponds to reduced telephone number ***YY**". The voice synthesizing device 41 generates the voice message signal and sends it to transmitter 5 for transmission. The transmitted signal is received by receiver 14 and emitted by speaker 15.

### Figure 10

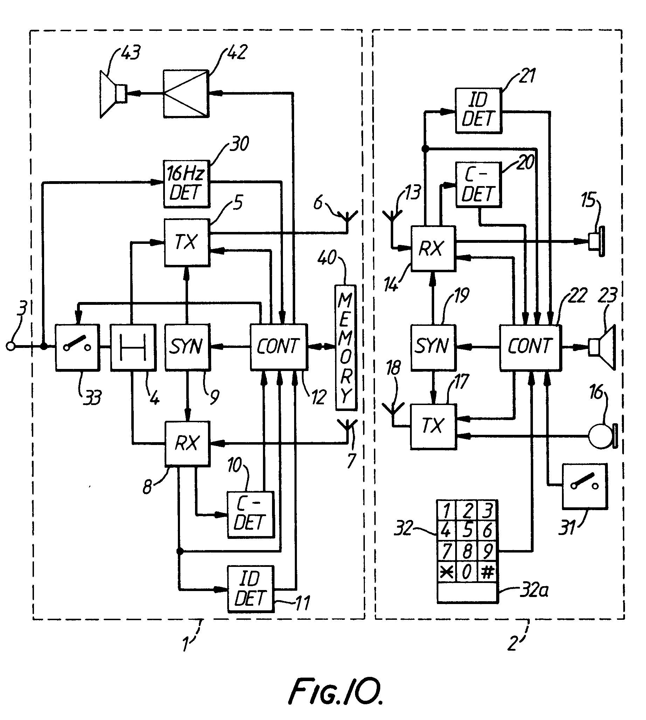

Figure 10 shows another modified circuit, in which base unit 1 includes a speaker 43, driven by an amplifier 42, to generate the ringing signal. If a call signal arrives from wired telephone line 3 while the received dial signal is being stored in memory 40, the signal is detected by detector 30. Then, control circuit 12 sends the ringing signal to amplifier 42 in response to the output signal from detector 30. The ringing signal is amplified and emitted to notify the user of the incoming telephone call. If the user puts down the handset and picks up it up again in response to the incoming telephone call, the radio telephone apparatus carries out the response operation for the incoming telephone call after carrying out the end of speech operation.

### General remarks

In the systems described, the registration signal is transmitted from the radio telephone set 2 after a call origination signal is transmitted. However, base unit 1 may transmit the response signal to carry out the registration operation of the dial signal simply in response to the initial reception of a call origination signal. Also, the base unit 1 may be arranged to recognize a request for a registering operation in response to a particular dial signal from radio telephone set 3, rather than the registration signal resulting from the depression of the registration key 32a.

Further, in the systems described, the ringing signal is generated by another telephone apparatus 50 and speaker 43 of base unit 1 if a calling signal arrives from wired telephone line 3 while the dial signal is being stored as the full telephone number information. However, control circuit 12 may cause transmitter to transmit a particular tone signal to radio telephone set 2, in response to the output signal of detector 30, in which case the tone signal would be emitted by speaker 15 to notify the user of the incoming telephone call.

## Claims

1. Radio telephone apparatus comprising a base unit (1) connected to a wired telephone line and communicating with a radio telephone set (2) via a radio channel, and including:
dialling means (32) in the radio telephone set for generating dial signals;
registration means (32a) for generating a control signal representing a storage request for telephone number information; and
memory means (40) in the base unit for storing the dial signal from the dialling means as telephone number information in response to the control signal; characterised in that the base unit (1) includes disconnect control means (12, 33) responsive to the control signal for electrically disconnecting the wired telephone line (3) from the base unit (1) to break a speech path; and
notification means *(30, 50)* for detecting an incoming telephone call on the wired telephone line (3) and generating a ringing signal for notifying the user if such detection occurs while the telephone number information is being stored.

2. Apparatus according to claim 1 wherein the radio telephone set (2) includes the registration means (32a) and transmits the control signal to the base unit (1) through the radio channel in response to the operation of a registration key (32a).

3. Apparatus according to claim 1 wherein the registration means generates the control signal in response to a predetermined dial signals from the dialling means (32).

4. Apparatus according to any previous claim characterised by confirmation means (41 or 42) for generating a confirmation signal for notifying the user if the dial signal has been stored in the memory means.

5. Apparatus according to claim 4 wherein the confirmation means (41) comprises a tone generator.

6. Apparatus according to claim 4 wherein the confirmation means (42) comprises a voice message synthesizer.

7. Apparatus according to any previous claim wherein the notification means (30, 50) includes;
means (50) for generating a call originating signal and
means (33) for connecting the wired telephone line to the base unit electrically to make a speech path in response to the call originating signal; and
means (12) for preventing the generation of the calling origination signal while the dial signal is being stored in the memory means.

## Patentansprüche

1. Funktelefongerät mit einer Basiseinheit (1), die an eine verdrahtete Telefonleitung angeschlossen ist und die mit einem Funktelefonapparat (2) über einen Funkkanal kommuniziert, mit:
Wähleinrichtungen (32) im Funktelefonapparat zur Erzeugung von Wählsignalen;
Gesprächsanmeldemittel (32a) zum Erzeugen eines Steuersignals, das eine Speicheranforderung für eine Telefonnummerninformation darstellt; und
Speichermittel (40) in der Basiseinheit zum Speichern des Wählsignals von dem Wählmittel als Telefonzahlinformation in Abhängigkeit von dem Steuersignal; **dadurch gekennzeichnet**, daß die Basiseinheit (1) Unterbrechungssteuermittel (12, 33) aufweist, die von dem Steuersignal angesteuert werden und die verdrahtete Telefonleitung (3) von der Basiseinheit (1) elektrisch trennt, um einen Sprechpfad zu unterbrechen; und daß
Vorbereitungsmittel (30, 50) zur Erkennung einer Fernverbindung auf der verdrahteten Telefonleitung (3) und zur Erzeugung eines Wählsignals zur Benachrichtigung des Benutzers, das eine solche Erkennung stattfindet, vorgesehen sind, während die Telefonnummerninformation gespeichert wird.

2. Vorrichtung nach Anspruch 1, wobei der Funktelefonapparat (2) das Ankündigungsmittel (32a) aufweist und das Steuersignal an die Basiseinheit (1) über den Funkkanal in Abhängigkeit von der Betätigung einer Anmeldetaste (32a) überträgt.

3. Vorrichtung nach Anspruch 1, wobei das Anmeldemittel das Steuersignal in Abhängigkeit von vorgegebenen Wählsignalen von dem Wählmittel (32) erzeugt.

4. Vorrichtung nach einem der vorhergehenden Ansprüche, **gekennzeichnet** durch Bestätigungsmittel (41 oder 42) zur Erzeugung eines Bestätigungssignals zur Benachrichtigung des Benutzers, falls das Wählsignal im Speichermittel gespeichert wurde.

5. Vorrichtung Anspruch 4, wobei das Bestätigungsmittel (41) einen Tongenerator aufweist.

6. Vorrichtung nach Anspruch 4, wobei das Bestätigungsmittel (42) einen Sprachnachrichtensynthesizer aufweist.

7. Vorrichtung nach einem der vorhergehenden Ansprüche, wobei das Ankündigungsmittel (30, 50) aufweist:
Mittel (50) zur Erzeugung eines Rufentstehungssignals und
Mittel (33) zum elektrischen Anschließen der verdrahteten Telefonleitung an die Basiseinheit zur Erzeugung eines Sprechpfades in Abhängigkeit von dem Rufherkunftssignal; und
Mittel (12) zur Verhinderung der Erzeugung des Rufherkunftssignals, während das Wählsignal im Speichermittel gespeichert wird.

## Revendications

1. Appareil de radiotéléphone comprenant une unité de base (1) connectée à une ligne de téléphone par fil et communiquant avec un appareil de radiotéléphone (2) par un canal radio, et comportant:
des moyens de composition de numéros (32) dans l'appareil de radiotéléphone pour générer des signaux de sélection;
des moyens d'enregistrement (32a) pour générer un signal de commande représentant une demande d'enregistrement pour une information de numéro de téléphone; et
des moyens de mémoire (40) dans l'unité de base pour la mémorisation du signal de sélection à partir des moyens de composition de numéros en tant qu'information de numéro de téléphone en réponse au signal de commande;
caractérisé en ce que l'unité de base (1) comprend des moyens de commande de déconnexion (12, 33) en réponse au signal de commande pour déconnecter électriquement la ligne de téléphone par fil (3) de l'unité de base (1) pour interrompre un circuit de signaux vocaux; et
des moyens d'avertissement (30, 50) pour la détection d'un appel téléphonique arrivant sur la ligne de téléphone par fil (3) et pour la génération d'un signal d'appel pour avertir l'utilisateur si une telle détection se produit pendant que l'information de numéro de téléphone est en cours d'enregistrement.

2. Appareil selon la revendication 1, dans lequel l'appareil de radiotéléphone (2) comporte des moyens d'enregistrement (32a) et transmet le signal de commande à l'unité de base (1) par l'intermédiaire du canal radio en réponse à l'actionnement d'une touche d'enregistrement (32a).

3. Appareil selon la revendication 1, dans lequel les moyens d'enregistrement génèrent le signal de commande en réponse à un signal de sélection prédéterminé à partir des moyens de composition de numéros (32).

4. Appareil selon l'une quelconque des revendications précédentes, caractérisé par des moyens de confirmation (41 ou 42) pour la génération d'un signal de confirmation pour aviser l'utilisateur si le signal de sélection a été mémorisé dans les moyens de mémoire.

5. Appareil selon la revendication 4, dans lequel les moyens de confirmation (41) comprennent un générateur de tonalité.

6. Appareil selon la revendication 4, dans lequel les moyens de confirmation (42) comprennent un synthétiseur de message vocal.

7. Appareil selon l'une quelconque des revendication précédentes, dans lequel les moyens d'avertissement (30, 50) comportent:
des moyens (50) pour la génération d'un signal d'appel,
des moyens (33) pour connecter électriquement la ligne de téléphone par fil à l'unité de base pour constituer un circuit de signaux vocaux en réponse au signal d'appel; et
des moyens (12) pour empêcher la génération du signal d'appel pendant que le signal de sélection est en cours de mémorisation dans les moyens de mémoire.
